# EUROPÄISCHE PATENTSCHRIFT

(11) **EP 3 835 638 B1**
(45) Veröffentlichungstag und Bekanntmachung des Hinweises auf die Patenterteilung: **30.03.2022**
(21) Anmeldenummer: 19214909.4
(22) Anmeldetag: 10.12.2019
(51) Int. Cl.: F16L 3/10, F16L 3/23, H02G 3/32, F03D 80/80, F16B 2/10, F16B 2/18, F16B 7/04

(54) **VORRICHTUNG ZUR BEFESTIGUNG VON LEITUNGEN**
DEVICE FOR FIXING LINES
DISPOSITIF DE FIXATION DE CONDUITES

(43) Veröffentlichungstag der Anmeldung: 16.06.2021
(73) Patentinhaber: WALTER STAUFFENBERG GMBH & CO. KG, 58791 Werdohl (DE)
(72) Erfinder: König, Ulrich Stefan, 58849 Herscheid (DE); Schulz, Matthäus, 57439 Attendorn (DE)
(74) Vertreter: Patentanwälte Dörner & Kötter PartG mbB

(56) Entgegenhaltungen:
- WO-A1-2014/037084
- SE-A1- 1 651 019

## Beschreibung

Die Erfindung betrifft eine Vorrichtung zur Befestigung von Leitungen, insbesondere von Stromkabeln, Rohren oder Schläuchen nach dem Oberbegriff des Patentanspruchs 1.

Zur Befestigung von Leitungen, insbesondere Stromkabeln, Rohren und Schläuchen kommen regelmäßig so genannte Schellen zum Einsatz, die einen Schellenkörper umfassen, der aus einem thermoplastischen oder elastomeren Kunststoff oder auch aus Metall hergestellt ist. Der Schellenkörper ist häufig aus zwei miteinander über Schrauben verbindbaren Befestigungsteilen gebildet, die im montierten Zustand eine Durchführung zur Aufnahme der Leitung bilden.

Die SE 1 651 019 A1 offenbart eine Koaxialkabelbefestigung umfassend einen Stützsitz, eine Abdeckplatte, die gelenkig mit dem Stützsitz verbunden ist, und eine elastomere Umhüllung.

Die WO 2014/037084 A1 offenbart ein Befestigungssystem für Strangelemente, wie Kabel, Schläuche oder Rohre, insbesondere bei Windkraftanlagen.

Zur Verlegung und Festlegung von Kabeln und Leitungen in dem Turm einer Windkraftanlage kommen derzeit unterschiedlichste Ausgestaltungen von Schellen der vorgenannten Art zum Einsatz. Nachteilig an diesen Schellen ist, dass diese eine hohe Bauteilanzahl mit sich bringen, wodurch die Montage erschwert ist.

Hier will die Erfindung Abhilfe schaffen. Der Erfindung liegt die Aufgabe zugrunde, eine Vorrichtung zur Befestigung von Leitungen, insbesondere Stromkabeln, Rohren oder Schläuchen bereitzustellen, die eine geringe Bauteilanzahl aufweisen und die insbesondere auch zur effizienten Festlegung von Leitungen innerhalb des Turms einer Windkraftanlage geeignet sind. Gemäß der Erfindung wird diese Aufgabe durch eine Vorrichtung mit den Merkmalen Patentanspruchs 1 gelöst.

Mit der Erfindung ist eine Vorrichtung zur Befestigung von Leitungen, insbesondere Stromkabeln, Rohren oder Schläuchen bereitgestellt, die eine geringere Bauteilanzahl aufweist und die eine effiziente Montage von Leitungen, insbesondere auch innerhalb des Turms einer Windkraftanlage ermöglicht. Hierzu umfassen die Befestigungsteile zwei Schellenteile, die über wenigstens ein Scharnier gelenkig miteinander verbunden sind, die jeweils wenigstens einen Klemmblock aufnehmen, der an seiner Außenmantelfläche eine Nut aufweist, in der ein Abschnitt eines Schellenteils positioniert ist und der an seiner der Nut gegenüberliegenden Innenseite eine rechtwinklig zu der Nut axial verlaufende zylindermantelabschnittsförmige Rinne zur Aufnahme einer Leitung aufweist. An dem der gelenkigen Verbindung gegenüberliegenden Ende eines Schellenteils ist ein Spannverschluss angeordnet, dessen Spannhaken mit einem an dem der gelenkigen Verbindung gegenüberliegenden Ende des anderen Schellenteils angeordneten Gegenhaken in Eingriff bringbar ist. Über den Spannverschluss können die Klemmblöcke mit ihrer Rinne gegen die von dieser aufgenommenen Leitung einfach verspannt werden. Durch die flächige Anlage der Rinne an der Leitung ist eine Beschädigung der Leitung verhindert. Durch temporäres Lösen des Spannverschlusses ist eine einfache Änderung der Positionierung der Leitung innerhalb der Vorrichtung ermöglicht. Bevorzugt sind die Klemmblöcke identisch ausgebildet. Hierdurch ist die Herstellung sowie die Montage vereinfacht.

In Weiterbildung der Erfindung ist der Spannhaken endseitig in Form einer Öse ausgebildet, deren dem Gegenhaken zugewandter Abschnitt gerade ausgebildet ist. Hierdurch ist eine gleichmäßige Kraftübertragung zwischen Spannhaken und Gegenhaken ermöglicht, wobei zugleich ein Herausgleiten des Spannhakens aus dem Gegenhaken vermieden ist.

In Ausgestaltung der Erfindung ist der Spannhaken über eine Gewindespindel mit dem Spannbügel des Spannverschlusses verbunden. Hierdurch ist eine einfache Justierung des Spannhakens zur Einstellung der Spannkraft des Spannverschlusses ermöglicht. Bevorzugt ist die Gewindespindel über Federelemente entgegen dem Spannbügel vorgespannt, die besonders bevorzugt Tellerfedern und/oder Schraubenfedern umfassen. Hierdurch ist ein Ausgleich von Elastizitätsverlusten der insbesondere aus einem Elastomerwerkstoff hergestellten Klemmblöcke durch Aushärten erzielt, wodurch die erforderliche Haltekraft der Vorrichtung gewährleistet ist.

In weiterer Ausgestaltung der Erfindung umfasst jedes der beiden Schellenteile eine ebene Stirnseite, an die gegenüberliegend winklig zu dieser zwei Seitenflügel angeformt sind. Hierdurch ist eine seitliche Fixierung der Klemmblöcke in den Schellenteilen erzielt. Bevorzugt sind die Seitenflügel in einem gleichen Winkel an die Stirnseite angestellt.

In weiterer Ausgestaltung der Erfindung entspricht die Innenkontur des Abschnitts des jeweiligen Schellenteils im Wesentlichen der Außenkontur des Nutengrundes der Nut des Klemmblocks, an dem dieses anliegt. Hierdurch ist eine gute Fixierung des jeweiligen Klemmblocks an dem jeweiligen Schellenteil erzielt. Axial sind die Klemmblöcke über die Seitenwände der Nut, in der diese angeordnet sind, gehalten.

In Weiterbildung der Erfindung weisen wenigstens ein Schellenteil sowie wenigstens ein von diesem aufgenommener Klemmblock zur formschlüssigen lösbaren Verbindung miteinander korrespondierende Rastmittel auf. Hierdurch ist eine einfache Fixierung der Klemmblöcke an den Schellenteilen erzielt.

In Ausgestaltung der Erfindung weist wenigstens ein Klemmblock wenigstens einen Raststift auf, der in eine Rastbohrung des diesen aufnehmenden Schellenteils einbringbar ist. Dabei ist bevorzugt dem Raststift vorgelagert in dem Klemmblock eine Materiaschwächung vorhanden, die beispielsweise durch eine bereichsweise Ausnehmung gebildet ist. Diese Materialschwächung ermöglicht ein begrenztes Zurückweichen des Ratstiftes beim Einbringen des Klemmblocks in ein Schellenteil, bis der Raststift in die Rastbohrung eingleitet.

In weiterer Ausgestaltung der Erfindung weist ein Schellenteil wenigstens eine Bohrung zur Durchführung einer Befestigungsschraube auf. Hierdurch ist eine einfache Befestigung der Vorrichtung innerhalb des Turms einer Windkraftanlage ermöglicht.

In Weiterbildung der Erfindung ist in einem Klemmstück oder zwischen zwei benachbart angeordneten Klemmstücken wenigstens ein Aufnahmeraum zur Aufnahme wenigstens einer Mutter angeordnet, deren Innengewindebohrung mit der Bohrung zur Durchführung einer Befestigungsschraube fluchtet. Dabei ist die Mutter vorzugsweise als Schweißmutter ausgebildet, die an dem Schellenteil befestigt ist. Um eine punktuelle Kraftbeaufschlagung auf einen Klemmblock durch eine Schraube zu vermeiden, die durch die Mutter hindurchgeschraubt wird, ist der Aufnahmeraum für die Mutter ausreichend tief zu dimensionieren.

In Ausgestaltung der Erfindung ist in einem Klemmstück zumindest bereichsweise in den Grund der Nut eine rechtwinklig zu dieser verlaufende Längsnut eingebracht, die den Aufnahmeraum für wenigstens eine Mutter bildet.

In Weiterbildung der Erfindung ist an die winklig angestellten, ersten Seitenflügel des ersten Schellenteils jeweils ein zweiter winklig angestellter Seitenflügel angeformt, wobei zwei Klemmblöcke angeordnet sind, die jeweils zwischen einem zweiten Seitenflügel und der Stirnseite des Schellenteils an einem ersten Seitenflügel anliegen. Dabei schließt bevorzugt jeweils ein erster Seitenflügel mit dem an diesem angeformten zweiten Seitenflügel einen Winkel von 120° ein. Hierdurch ist eine gleichmäßige, winklige Anordnung von drei Klemmblöcken zueinander innerhalb der Vorrichtung erzielt, deren Rinnen der Anlage jeweils eines Kabels dienen. Dabei können in der so ausgestalteten Vorrichtung sowohl drei Kabel derart aufgenommen sein, dass diese gegeneinander verspannt werden. Es ist auch das Vorsehen eines im Wesentlichen sternförmig ausgebildeten Mittelstücks möglich, gegen das die drei Kabel über die Vorrichtung verspannbar sind.

In einer anderen Ausgestaltung der Erfindung nimmt jedes Schellenteil genau einen Klemmblock auf, wobei die an die Stirnseite eines jeden Schellenteils angeformten Seitenflügel jeweils in einem Winkel von 90° an die Stirnseite angestellt sind. In dieser Ausgestaltung weisen die beiden Klemmblöcke eine im Wesentlichen quaderförmige Gestalt auf, die von den im Wesentlichen C-förmig ausgebildeten Schellenteilen umfasst sind und deren Rinnen der Aufnahme einer zwischen diesen durchgeführten Leitung dienen, gegen welche die Klemmblöcke verspannbar sind. In dieser Ausgestaltung sind die Schellenteile und die Klemmblöcke vorzugsweise identisch ausgebildet.

In weiterer Ausgestaltung der Erfindung sind die Schellenteile aus Metall, vorzugsweise aus Stahlblech, und die Klemmblöcke aus Kunststoff, vorzugsweise Elastomer, hergestellt. Hierdurch ist eine zuverlässige Verspannung der Klemmblöcke durch die Schellenteile gewährleistet. Die elastischen Klemmblöcke bilden eine gleichmäßig vorgespannte Anlagefläche an die von diesen aufgenommenen Kabel aus.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1: die schematische Darstellung einer Vorrichtung zur Befestigung einer Leitung mit angedeutetem Leitungsverlauf a) in einer ersten räumlichen Darstellung; b) in einer zweiten räumlichen Darstellung;
- Figur 2: die Darstellung der Vorrichtung aus Figur 1 a) in einer Ansicht von hinten; b) in der Seitenansicht; c) in der Vorderansicht;

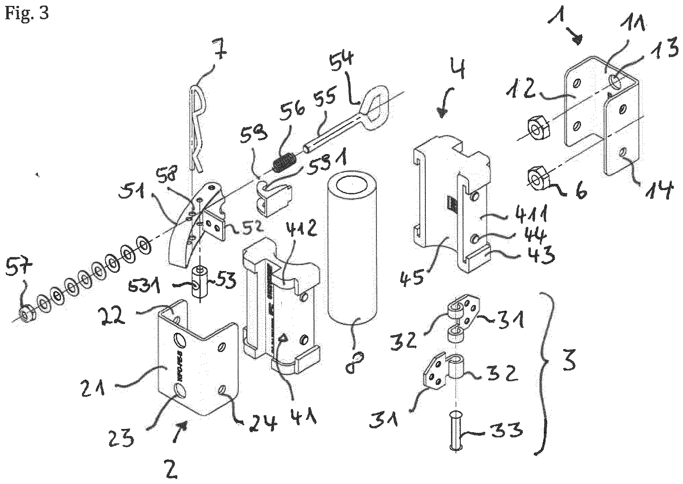

- Figur 3: die Vorrichtung aus Figur 1 in einer Explosionsdarstellung;
- Figur 4: die schematische Darstellung einer Vorrichtung in einer weiteren Ausführungsform zur Befestigung von drei Leitungen mit ange-deutetem Leitungsverlauf a) in einer ersten räumlichen Darstellung; b) in einer zweiten räumlichen Darstellung;
- Figur 5: die Darstellung der Vorrichtung aus Figur 4 a) in einer Ansicht von hinten; b) in der Seitenansicht; c) in der Ansicht von vorne und

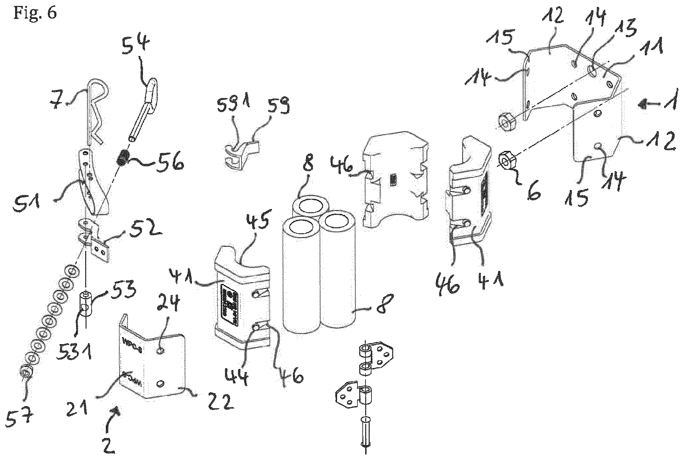

- Figur 6: die Vorrichtung aus Figur 4 in einer Explosionsdarstellung.

Die als Ausführungsbeispiel gewählte Vorrichtung zur Befestigung von Leitungen, insbesondere von elektrischen Leitungen innerhalb des Turms einer Windkraftanlage umfasst ein erstes Schellenteil 1 und ein zweites Schellenteil 2, die über ein Scharnier 3 gelenkig miteinander verbunden sind und die jeweils einen Klemmblock 4 aufnehmen, wobei ein Spannverschluss 5 angeordnet ist, über den die beiden Schellenteile 1, 2 gegeneinander verspannbar sind.

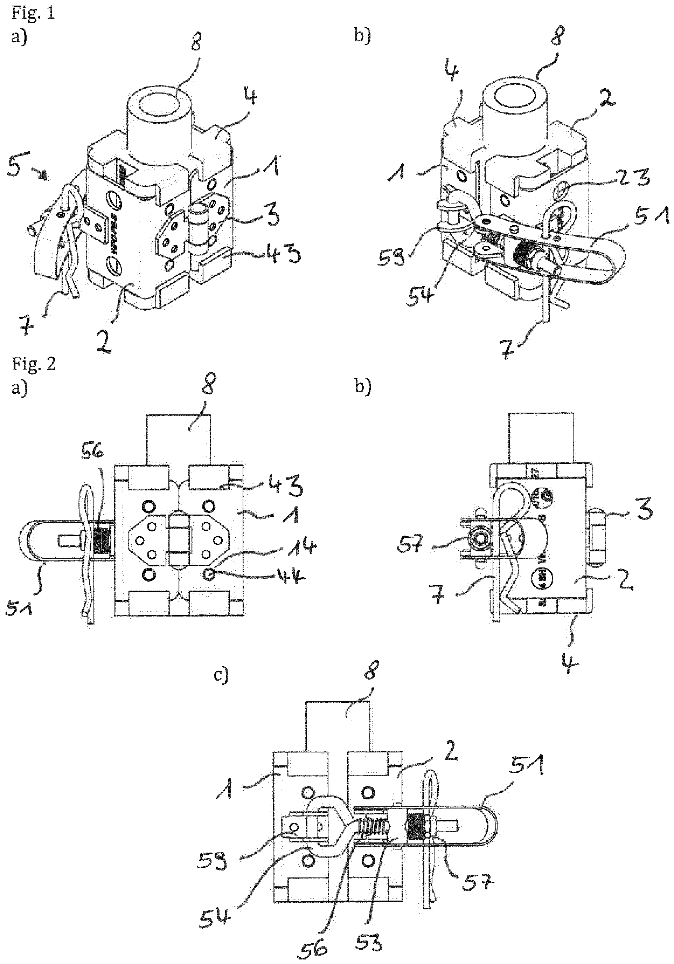

Die beiden Schellenteile 1, 2 sind im Ausführungsbeispiel gemäß Figur 1 als identische C-förmige Blechbiegeteile ausgeführt und weisen eine Stirnseite 11, 21 auf, an deren Längsseiten zwei gegenüberliegend angeordnete Seitenflügel 12, 22 angeformt sind. Die Seitenflügel 12, 22 sind rechtwinklig zur Stirnseite 11, 21 an diese angestellt. Mittig sind in die Stirnseite 11, 21 beabstandet zueinander zwei Bohrungen 13, 23 eingebracht. Fluchtend mit den Bohrungen 13, 23 sind an die Stirnseite 11, 21 an ihrer den Seitenflügeln 12, 22 zugewandten Seite Schweißmuttern 6 befestigt. Die Seitenflügel 12, 22 sind weiterhin jeweils mit zwei beabstandet zueinander angeordneten Rastbohrungen 14, 24 versehen.

Das Scharnier 3 besteht im Wesentlichen aus zwei Scharnierbeschlägen 31, die jeweils an einem der beiden Schellenteile 1, 2 befestigt sind und die endseitig zueinander verschränkte Ösen 32 aufweisen, durch die eine Achse 33 geführt ist.

Der Klemmblock 4 ist im Ausführungsbeispiel als im Wesentlichen quaderförmiges Kunststoffspritzgussteil ausgebildet. An seiner dem Schellenteil 1, 2 zugewandten Rückseite ist in den Klemmblock 4 eine Nut 41 eingebracht, die sich auch über die an die Rückseite angrenzenden Seitenflächen erstreckt und deren Breite in etwa der Höhe des Schellenteils 1, 2 entspricht, von dem der Klemmblock 4 aufgenommen ist. In den Nutengrund 411 der Nut 41 ist eine Längsnut 42 eingebracht, die sich über die gesamte Länge des Klemmblocks 4 erstreckt, wobei sie auch die Seitenwände 412 der Nut 41 durchdringt. An den schmalen Seiten des Klemmblocks 4 sind außen Führungsstege 43 angeformt, die über die Seitenwände 412 der Nut 41 herauskragen, so dass durch jeweils zwei gegenüberliegend angeordnete Führungsstege 43 ein Einschub für das Schellenteil 1, 2 gebildet ist. Zwischen den Führungsstegen 43 sind an beiden schmalen Seiten des Klemmblocks 4 auf dem Nutengrund 411 der Nut 41 beabstandet zueinander zwei Raststifte 44 angeformt, die mit den Rastbohrungen 14, 24 der Seitenflügel 11, 22 der Schellenteile 1, 2 korrespondieren.

An seiner der Längsnut 42 gegenüberliegenden Vorderseite ist in den Klemmblock 4 in Längsrichtung eine Rinne 45 eingebracht, deren Mantelfläche im Wesentlichen teilzylindermantelförmig ausgebildet ist. Vorzugsweise entspricht der Innendurchmesser der Rinne 45 etwa dem Außendurchmesser der von der Vorrichtung aufzunehmenden Leitung 8.

Der Klemmblock 4 ist derart in das jeweilige Schellenteil 1, 2 eingesetzt, dass die Seitenflügel 12, 22 des Schellenteils 1, 2 zwischen dem Nutengrund 411 und den Führungsstegen 43 geführt sind. Die Raststifte 44 greifen dabei in die Rastbohrungen 14, 24 ein. In dieser Position sind die an die Schellenteile 1, 2 angeformten Schweißmuttern 6 in dem durch die Längsnut 42 gebildeten Aufnahmeraum positioniert.

Der Spannverschluss 5 umfasst einen Spannbügel 51, der an einem Ausleger 52, der an dem zweiten Schellenteil 2 befestigt ist, schwenkbar gelagert ist. Der Spannbügel 51 ist aus einem U-förmig gebogenen Blech gebildet, zwischen dessen Schenkeln eine Welle 53 rotierbar gelagert ist. In die Welle 53 ist radial eine Gewindebohrung 531 eingebracht, in welche die Gewindespindel 55 eines Spannhakens 54 eingeschraubt ist. Auf den Spannhaken 54 ist eine Schraubenfeder 56 aufgeschoben, die zwischen Spannhaken 54 und Welle 53 vorgespannt ist. Endseitig ist die Gewindespindel 55 des Spannhakens 54 über eine Sicherungsmutter 57 gesichert. Zwischen Sicherungsmutter 57 und Spannbügel 51 sind Tellerfedern 561 auf der Gewindespindel angeordnet. Durch die Tellerfedern 561 ist die erforderliche Klemmkraft des Spannverschlusses 5 auch bei abnehmender Elastizität der aus einem Elastomerwerkstoff hergestellten Klemmblöcke 4 gewährleistet.

In den Spannbügel 51 sind weiterhin Bohrungen 58 zur Durchführung eines Sicherungssplintes 7 eingebracht. Der endseitig ösenförmig ausgebildete Spannhaken 54 ist zum Verspannen des ersten Schellenteils 1 gegen das zweite Schellenteil 2 in den Hinterschnitt 591 eines an dem ersten Schellenteil 1 befestigten Gegenhakens 59 einsetzbar. Hierzu ist der dem Gegenhaken 59 zugewandte Abschnitt des ösenförmig ausgebildeten Spannhakens 54 gerade ausgebildet.

Zur Befestigung einer Leitung 8 wird diese zunächst in die Rinne 45 des Klemmblocks 4 des ersten Schellenteils 1 gelegt, wonach der Klemmblock 4 des zweiten Schellenteils 2 über das Scharnier 3 verschwenkt wird, bis dessen Rinne 45 ebenfalls an der Leitung 8 anliegt. Nachfolgend wird der Spannbügel 51 verschwenkt, wodurch der Spannhaken 45 hinter den Gegenhakens 59 gelangt, der sodann in dessen Hinterschnitt 51 eingelegt wird. Sodann wird der Spannbügel 51 in Gegenrichtung verschwenkt, wodurch das erste Schellenteil 1 gegen das zweite Schellenteil 3 und somit die beiden Klemmblöcke 4 gegen die von diesem aufgenommene Leitung 8 verspannt werden. Um ein unbeabsichtigtes Öffnen des Spannverschlusses 5 zu verhindern, wird dieser über einen Sicherungssplint 7, der durch die Bohrungen 58 des Spannbügels 51 eingesetzt wird, gesichert.

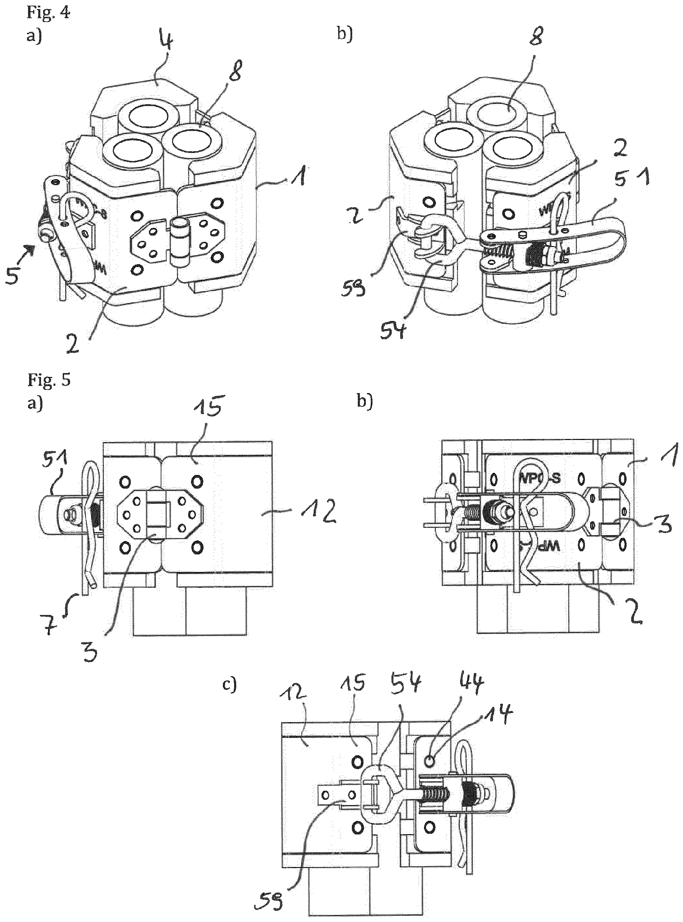

Im Ausführungsbeispiel gemäß Figur 4 ist die Vorrichtung zur Aufnahme von drei Leitungen ausgebildet. Das erste Schellenteil 1 weist hier wiederum eine Stirnseite 11 auf, an dessen Längsseiten zwei Seitenflügel 12 angeformt sind. Die Seitenflügel 12 sind hier in einem Winkel von 120° an die Stirnseite 11 angestellt. An den Seitenflügeln 12 ist jeweils ein zweiter Seitenflügel 15 angeformt, der wiederum in einem Winkel von 120° an den jeweils benachbarten ersten Seitenflügel 12 angestellt ist. Ein erster Seitenflügel 12 bildet so zusammen mit dem an diesem angeformten zweiten Seitenflügel 15 und der Stirnseite 11 jeweils eine Aufnahme für einen Klemmblock 4. Hierzu sind die zweiten Seitenflügel 15 jeweils mit beabstandet zueinander angeordneten Rastbohrungen 14 versehen. Den Rastbohrungen 14 gegenüberliegend sind jeweils zwei weitere Rastbohrungen 14 in die Stirnseite 11 eingebracht, die somit vier Rastbohrungen 14 aufweist. Mittig sind in der Stirnseite 11 wiederum beabstandet zueinander zwei Bohrungen 13 eingebracht. Mit den Bohrungen 13 fluchtend sind an die Stirnseite 11 auf ihrer den Seitenflügeln 12 zugewandten Seite zwei Schweißmuttern 6 befestigt.

Das zweite Schellenteil 2 ist ebenfalls als Blechbiegeteil ausgeführt und weist eine Stirnseite 21 auf, an deren beiden Längsseiten zwei Seitenflügel 22 angeformt sind, welche jeweils in einen Winkel von 120° an die Stirnseite 21 angestellt sind. In die Seitenflügel 22 sind jeweils beabstandet zueinander zwei Rastbohrungen 24 eingebracht.

Die Klemmblöcke 4 sind in Art eines Prismas mit trapezförmigen Grundflächen ausgebildet. In der dem Kabel 8 zugewandten Vorderseite ist eine Rinne 45 eingebracht, die im Wesentlichen halbzylindermantelförmig ausgebildet ist. Die der Rinne 45 gegenüberliegende Rückseite schließt mit den an diese angrenzenden Seitenwänden jeweils einen Winkel von 120° ein. In die Rückseite sowie die an diese angrenzenden Seitenwände ist wiederum eine Nut 41 zur Aufnahme eines Schellenteils 1, 2 eingebracht. Im Bereich der Seitenwände des Klemmblocks 4 sind an den Nutengrund 411 der Nut 41 jeweils beabstandet zueinander zwei Raststifte 44 angeformt. Den Raststiften 44 vorgelagert ist in den Klemmblock 4 jeweils eine prismaförmige Ausnehmung 46 eingebracht. Durch die Ausnehmungen 46 ist ein elastisches Verschwenken der Raststifte 44 in begrenztem Maße ermöglicht.

In das erste Schellenteil 1 sind zwei Klemmblöcke 4 eingesetzt, wobei jeweils ein Klemmblock zwischen Stirnseite 11 und einen zweiten Seitenflügel 15 eingeschoben sind, bis die Raststifte 44 in die Rastbohrungen 14 eingerastet sind. Ein Seitenflügel 12 liegt so zwischen den Seitenwänden 412 an dem Nutengrund 411 der Nut 41 des Klemmblocks 4 an. Die Schweißmuttern 6 sind in einem zwischen den beiden Klemmblöcken 4 gebildeten Aufnahmeraum positioniert. Hierzu sind in den Klemmblöcken sich ergänzende Aussparungen eingebracht. Ein weiterer Klemmblock 4 ist von dem zweiten Schellenteil 2 aufgenommen, dass wiederum an dem Nutengrund 412 des Klemmblocks 4 anliegt. Die Raststifte 44 greifen hierbei in die Rastbohrungen 24 des zweiten Schellenteils 2 ein. Das erste Schellenteil ist wiederum über ein Scharnier 3 mit dem zweiten Schellenteil 2 schwenkbar verbunden und über einen Spannverschluss 5 in der zuvor beschriebenen Art und Weise gegeneinander verspannbar.

## Patentansprüche

1. Vorrichtung zur Befestigung von Leitungen (8), insbesondere Stromkabeln, Rohren oder Schläuchen, umfassend wenigstens zwei miteinander verbindbare Befestigungsteile, welche im montierten Zustand eine Durchführung bilden, wobei die Befestigungsteile zwei Schellenteile (1, 2) umfassen, die über wenigstens ein Scharnier (3) gelenkig miteinander verbunden sind und die jeweils wenigstens einen Klemmblock (4) aufnehmen, der an seiner Außenmantelfläche eine Nut (41) aufweist, in der ein Abschnitt eines Schellenteils (1, 2) positioniert ist und der an seiner der Nut (41) gegenüberliegenden Innenseite eine rechtwinklig zu der Nut (41) axial verlaufende, zylindermantelabschnittsförmige Rinne (45) zur Aufnahme einer Leitung aufweist, wobei an dem der gelenkigen Verbindung gegenüberliegenden Ende eines Schellenteils (2) ein Spannverschluss (5) angeordnet ist, dessen Spannhaken (54) mit einem an dem der gelenkigen Verbindung gegenüberliegenden Ende des anderen Schellenteils (1) angeordneten Gegenhaken in Eingriff bringbar ist, **dadurch gekennzeichnet, dass** die Klemmblöcke (4) in Art eines Prismas mit trapezförmigen Grundflächen ausgebildet sind oder eine im Wesentlichen quaderförmige Gestalt aufweisen.

2. Vorrichtung nach Anspruch 1, **dadurch gekennzeichnet, dass** der Spannhaken (54) endseitig in Form einer Öse ausgebildet ist, deren dem Gegenhaken (59) zugewandter Abschnitt gerade ausgebildet ist.

3. Vorrichtung nach Anspruch 1 oder 2, **dadurch gekennzeichnet, dass** der Spannhaken (54) über eine Gewindespindel (55) mit dem Spannbügel (51) des Spannverschlusses (5) verbunden ist.

4. Vorrichtung nach Anspruch 3, **dadurch gekennzeichnet, dass** die Gewindespindel (55) über Federelemente gegenüber dem Spannbügel (51) vorgespannt ist, die bevorzugt Tellerfedern (561) und/oder Schraubenfedern (56) umfassen.

5. Vorrichtung nach einem der vorgenannten Ansprüche, **dadurch gekennzeichnet, dass** jedes der beiden Schellenteile (1, 2) eine ebene Stirnseite (11, 21) umfasst, an die gegenüberliegend winklig zu dieser zwei Seitenflügel (12, 22) angeformt sind, wobei die Seitenflügel (12, 22) bevorzugt in einem gleichen Winkel an die Stirnseite (11, 21) angestellt sind.

6. Vorrichtung nach einem der vorgenannten Ansprüche, **dadurch gekennzeichnet, dass** die Innenkontur des Abschnitts des jeweiligen Schellenteils (1, 2) im Wesentlichen der Außenkontur des Nutengrundes (411) der Nut (41) des Klemmblocks (4) entspricht, an dem dieses anliegt.

7. Vorrichtung nach einem der vorgenannten Ansprüche, **dadurch gekennzeichnet, dass** wenigstens ein Schellenteil (1, 2) sowie wenigstens ein von diesem aufgenommener Klemmblock (4) zur formschlüssigen, lösbaren Verbindung miteinander korrespondierende Rastmittel aufweisen.

8. Vorrichtung nach Anspruch 7, **dadurch gekennzeichnet, dass** wenigstens ein Klemmblock (4) wenigstens einen Raststift (44) aufweist, der in eine Rastbohrung (14, 24) des diesen aufnehmenden Schellenteils (1, 2) einbringbar ist, wobei bevorzugt dem Raststift (44) vorgelagert in dem Klemmblock (4) eine Materialschwächung vorhanden ist.

9. Vorrichtung nach einem der vorgenannten Ansprüche, **dadurch gekennzeichnet, dass** ein Schellenteil (1, 2) wenigstens eine Bohrung (13, 23) zur Durchführung einer Befestigungsschraube aufweist.

10. Vorrichtung nach Anspruch 9, **dadurch gekennzeichnet, dass** in einem Klemmblock (4) oder zwischen zwei benachbart angeordneten Klemmblöcken (4) wenigstens ein Aufnahmeraum zur Aufnahme wenigstens einer Mutter angeordnet ist, deren Innengewindebohrung mit der Bohrung (13, 23) zur Durchführung einer Befestigungsschraube fluchtet.

11. Vorrichtung nach Anspruch 10, **dadurch gekennzeichnet, dass** in einem Klemmblock (4) zumindest bereichsweise in den Nutengrund (411) eine rechtwinklig zu dieser verlaufende Längsnut (42) zur Aufnahme wenigstens einer Mutter eingebracht ist.

12. Vorrichtung nach einem der Ansprüche 9 bis 11, **dadurch gekennzeichnet, dass** an dem Schellenteil (1, 2) eine Schweißmutter (6) befestigt ist, deren Innengewinde mit der Bohrung (13, 23) fluchtet.

13. Vorrichtung nach einem der Ansprüche 5 bis 12, **dadurch gekennzeichnet, dass** an die winklig angestellten ersten Seitenflügel (12) des ersten Schellenteils (1) jeweils ein zweiter, winklig angestellter Seitenflügel (15) angeformt ist, wobei zwei Klemmblöcke (4) angeordnet sind, die jeweils zwischen einem zweiten Seitenflügel (15) und der Stirnseite (11) des Schellenteils (1) an dem ersten Seitenflügel (12) anliegen.

14. Vorrichtung nach einem der Ansprüche 5 bis 12, **dadurch gekennzeichnet, dass** jeweils ein erster Seitenflügel (12) mit dem an diesem angeformten zweiten Seitenflügel (15) einen Winkel von 120 Grad einschließt.

15. Vorrichtung nach einem der Ansprüche 5 bis 12, **dadurch gekennzeichnet, dass** jedes Schellenteil (1, 2) genau einen Klemmblock (4) aufnimmt, wobei die an die Stirnseite (11, 21) eines jeden Schellenteils (1, 2) angeformten Seitenflügel (12, 22) jeweils in einem Winkel von 90 Grad an die Stirnseite (11) angestellt sind.

## Claims

1. Device for fixing lines (8), in particular electric cables, pipes or hoses, comprising at least two fastening parts, which can be connected to one another, which form a feedthrough in the mounted state, wherein the fastening parts comprise two clamp parts (1, 2), which are hingedly connected to one another via at least one hinge (3) and which each receive at least one clamping block (4), which has a groove (41) on its outer surface, in which a section of a clamp part (1, 2) is positioned and which has on its inner side opposite the groove (41) a channel (45) in the form of a cylinder jacket section running axially at right angles to the groove (41) to receive a line, wherein at the end of a clamp part (2) opposite the hinged connection a tension lock (5) is arranged, whose tensioning hook (54) is engageable with a counter hook arranged at the end of the other clamp part (1) opposite the hinged connection, **characterised in that** the clamping blocks (4) are designed in the manner of a prism with trapezoidal bases or have a substantially cuboid shape.

2. Device according to claim 1, **characterised in that** the end of the tensioning hook (54) is designed in the form of an eyelet, whose section facing the counter hook (59) is straight.

3. Device according to claim 1 or 2, **characterised in that** the tensioning hook (54) is connected to the tensioning bracket (51) of the tensioning fastener (5) via a threaded spindle (55).

4. Device according to claim 3, **characterised in that** the threaded spindle (55) is pretensioned against the tensioning bracket (51) via spring elements, which preferably comprise disc springs (561) and/or coil springs (56).

5. Device according to one of the previous claims, **characterised in that** each of the two clamp parts (1, 2) comprises a flat end face (11, 21), to which two side wings (12, 22) are moulded opposite at an angle to it, wherein the side wings (12, 22) are preferably set at an equal angle to the end face (11, 21).

6. Device according to one of the previous claims, **characterised in that** the inner contour of the section of the respective clamp part (1, 2) substantially corresponds to the outer contour of the groove base (411) of the groove (41) of the clamping block (4), against which it rests.

7. Device according to one of the previous claims, **characterised in that** at least one clamp part (1, 2) as well as at least one clamping block (4) received thereby have corresponding latching means for a positive, detachable connection to one another.

8. Device according to claim 7, **characterised in that** at least one clamping block (4) has at least one locking pin (44), which can be inserted in a locking bore (14, 24) of the clamp part (1, 2) receiving it, wherein a material weakening is preferably present in the clamping block (4) upstream of the locking pin (44).

9. Device according to one of the previous claims, **characterised in that** a clamp part (1, 2) has at least one bore (13, 23) for the passage of a fastening screw.

10. Device according to claim 9, **characterised in that** in a clamping block (4) or between two adjacently arranged clamping blocks (4) at least one receiving space for receiving at least one nut is arranged, whose internally threaded bore is aligned with the bore (13, 23) for the passage of a fastening screw.

11. Device according to claim 10, **characterised in that** in one clamping block (4) a longitudinal groove (42) running at right angles to the groove is inserted in the groove base (411), at least in certain regions, to receive at least one nut.

12. Device according to one of claims 9 to 11, **characterised in that** a weld nut (6) is attached to the clamp part (1, 2), whose internal thread is aligned with the bore (13, 23).

13. Device according to one of claims 5 to 12, **characterised in that** a second angularly set side wing (15) is formed on each of the first angularly set side wings (12) of the first clamp part (1), wherein two clamping blocks (4) are arranged, which each rest against the first side wing (12) between a second side wing (15) and the end face (11) of the clamp part (1).

14. Device according to one of claims 5 to 12, **characterised in that** in each case a first side wing (12) encloses an angle of 120 degrees with the second side wing (15) moulded onto it.

15. Device according to one of claims 5 to 12, **characterised in that** each clamp part (1, 2) receives exactly one clamping block (4), wherein the side wings (12, 22) moulded onto the end face (11, 21) of each clamp part (1, 2) are each set at an angle of 90 degrees to the end face (11).

## Revendications

1. Dispositif de fixation de ligneset conduites (8), notamment de câbles électriques, de tuyaux ou flexibles, comprenant au moins deux pièces de fixation reliables entre elles qui, à l'état monté, forment un passage, sachant que les pièces de fixation comprennent deux pièces-colliers (1, 2) reliées de façon articulée l'une à l'autre via au moins une charnière (3) et qui respectivement reçoivent au moins un bloc de bridage (4) présentant une gorge (41) sur sa surface enveloppante externe, gorge dans laquelle est positionné un segment d'une pièce-collier (1, 2), et bloc qui présente, sur son côté intérieur opposé à la gorge (41), une rigole (45) en forme d'enveloppe cylindrique segmentée au tracé axial perpendiculaire à la gorge (41) servant à recevoir une ligne ou conduite,
sachant que sur l'extrémité d'une pièce-collier (2) située en face de la liaison articulée est disposée une fermeture à genouillère (5), dont le crochet de serrage (54) peut être amené en engrènement avec un crochet antagoniste, disposé sur l'extrémité opposée de la liaison articulée de l'autre pièce-collier (1), **caractérisé en ce que** les blocs de bridage (4) sont configurés en forme de prisme à surfaces de base trapézoïdales ou présentent une géométrie essentiellement en forme de parallélépipède.

2. Dispositif selon la revendication 1, **caractérisé en ce que** le crochet de serrage (54) est configuré en son extrémité en forme d'œillet dont le segment regardant le crochet antagoniste (59) est configuré droit.

3. Dispositif selon la revendication 1 ou 2, **caractérisé en ce que** le crochet de serrage (54) est relié par une broche filetée (55) avec l'étrier (51) de la fermeture de serrage (5).

4. Dispositif selon la revendication 3, **caractérisé en ce que** la broche filetée (55) est précontrainte via des éléments ressorts par rapport à l'étrier de serrage (51), éléments qui comprennent de préférence des ressorts assiettes (561) et/ou des ressorts hélicoïdaux (56).

5. Dispositif selon l'une des revendications précédentes, **caractérisé en ce que** chacune des deux pièces (1, 2) de collier présente un côté frontal plat (11, 21) contre lequel sont modelées se faisant face deux ailes latérales (12, 22) en angle par rapport audit côté frontal, sachant que les ailes latérales (12, 22) présentent de préférence un angle identique par rapport au côté frontal (11, 21).

6. Dispositif selon l'une des revendications précédentes, **caractérisé en ce que** le contour intérieur du segment de la partie (1, 2) de collier respective correspond essentiellement au contour extérieur du fond (411) de la gorge (41) du bloc de bridage contre lequel (4) elle applique.

7. Dispositif selon l'une des revendications précédentes, **caractérisé en ce qu'**au moins une partie (1, 2) de collier ainsi qu'au moins un bloc de bridage (4) reçu par elle présente des moyens de crantage s'épousant mutuellement pour former une liaison par adhérence de forces détachable.

8. Dispositif selon la revendication 7, **caractérisé en ce qu'**au moins un bloc de bridage (4) présente au moins une tige de crantage (44) qu'il est possible d'introduire dans un alésage de crantage (14, 24) de cette partie (1, 2) de collier la recevant, sachant que de préférence en amont de la tige de crantage (44) est présente une fragilisation de la matière dans le bloc de bridage (4).

9. Dispositif selon l'une des revendications précédentes, **caractérisé en ce qu'**une partie (1, 2) de collier présente au moins un alésage (13, 23) pour faire passer une vis de fixation.

10. Dispositif selon la revendication 9, **caractérisé en ce que** dans un bloc de bridage (4) ou entre deux blocs de bridage (4) voisins est disposé au moins un volume réceptacle pour recevoir au moins un écrou dont l'alésage taraudé intérieur est aligné sur l'alésage (13, 23) servant à faire passer une vis de fixation.

11. Dispositif selon la revendication 10, **caractérisé en ce que** dans un bloc de bridage (4) est ménagée, au moins localement, dans le fond (411) de gorge, une gorge longitudinale (42) au tracé perpendiculaire à la gorge première citée, pour recevoir au moins un écrou.

12. Dispositif selon l'une des revendications 9 à 11, **caractérisé en ce que** contre la partie (1, 2) de collier est fixé un écrou soudé (6) dont le filetage intérieur est aligné sur l'alésage (13, 23).

13. Dispositif selon l'une des revendications 5 à 12, **caractérisé en ce que** contre les premières ailes latérales (12) en angle de la première partie (1) de collier est modelée respectivement une deuxième aile latérale (15) en angle, sachant que sont disposés deux blocs de bridage (4) qui appliquent respectivement, entre une deuxième aile latérale (15) et le côté frontal (11) de la partie (1) de collier, contre la première aile latérale (12).

14. Dispositif selon l'une des revendications 5 à 12, **caractérisé en ce que** respectivement une première aile latérale (12) définit, avec la deuxième aile latérale (15) modelée contre elle, un angle de 120 degrés.

15. Dispositif selon l'une des revendications 5 à 12, **caractérisé en ce que** chaque partie (1, 2) de collier reçoit exactement un bloc de bridage (4), sachant que les ailes latérales (12, 22) modelées contre le côté frontal (11, 21) de chaque partie de collier (1, 2) sont respectivement en applique en angle de 90 degrés contre le côté frontal (11).
